# EUROPEAN PATENT APPLICATION

(11) **EP 4 604 472 A1**
(43) Date of publication of application: **20.08.2025**
(21) Application number: 23877577.9
(22) Date of filing: 27.09.2023
(51) Int. Cl.: H04L 27/26, H04J 99/00, H04W 84/12, H04J 13/00

(54) **METHOD AND DEVICE FOR TRANSMITTING/RECEIVING PPDU ON BASIS OF TRIGGER FRAME IN WIRELESS LAN SYSTEM**

(30) Priority: 14.10.2022 KR 20220132528
(71) Applicant: LG Electronics Inc., Yeongdeungpo-gu Seoul 07336 (KR)
(72) Inventor: JUNG, Insik, Seoul 06772 (KR); CHUN, Jinyoung, Seoul 06772 (KR); CHOI, Jinsoo, Seoul 06772 (KR); LIM, Dongguk, Seoul 06772 (KR); PARK, Eunsung, Seoul 06772 (KR); BAEK, Sunhee, Seoul 06772 (KR)
(74) Representative: Frenkel, Matthias Alexander
(86) International application number: PCT/KR2023/015003
(87) International publication number: WO 2024/080649

(57) **Abstract**

Disclosed are an operating method and device in a wireless LAN system. A method carried out by a first STA in a wireless LAN system, according to one embodiment of the present disclosure, comprises the steps of: receiving a trigger frame from a second STA; and, on the basis of the trigger frame, transmitting a trigger-based (TB) physical layer protocol data unit (PPDU) to the second STA, wherein the trigger frame may include i) first information related to at least one uplink (UL) non-ortl1ogonal multiple access (NOMA) transmission characteristic, and ii) second information specifying at least one multiple access (MA) signature value based on the at least one UL NOMA transmission characteristic.

## Description

### [TECHNICAL FIELD]

The present disclosure relates to communication operations in a wireless local area network (WLAN) system, and more particularly, to methods and devices in a next-generation wireless LAN system.

### [BACKGROUND ART]

New technologies for improving transmission rates, increasing bandwidth, improving reliability, reducing errors, and reducing latency have been introduced for a wireless LAN (WLAN). Among WLAN technologies, an Institute of Electrical and Electronics Engineers (IEEE) 802.11 series standard may be referred to as Wi-Fi. For example, technologies recently introduced to WLAN include enhancements for Very High-Throughput (VHT) of the 802.11ac standard, and enhancements for High Efficiency (HE) of the IEEE 802.11ax standard.

In order to provide a more advanced wireless communication environment, improved technologies for Extremely High Throughput (EHT) are being discussed. For example, technologies for MIMO and multiple access point (AP) coordination that support increased bandwidth, efficient utilization of multiple bands, and increased spatial streams are being studied, and in particular, various technologies are being studied to support low latency or real-time traffic. Furthermore, new technologies are being discussed to support ultra high reliability (UHR), including improvements or extensions of EHT technologies.

### [Disclosure]

### [Technical Problem]

The technical problem of the present disclosure is to provide a method and device for transmitting and receiving a PPDU based on a trigger frame in a wireless LAN system.

The technical problem of the present disclosure is to provide a method and device for transmitting and receiving a trigger frame including information related to non-orthogonal multiple access (NOMA)-based transmission.

The technical objects to be achieved by the present disclosure are not limited to the above-described technical objects, and other technical objects which are not described herein will be clearly understood by those skilled in the pertinent art from the following description.

### [Technical Solution]

According to one embodiment of the present disclosure, a method is performed by a first station (STA) in a wireless LAN system may include receiving a trigger frame from a second STA; and transmitting a trigger-based (TB) physical layer protocol data unit (PPDU) to the second STA based on the trigger frame, and the trigger frames may include i) first information related to at least one uplink (UL) non-orthogonal multiple access (NOMA) transmission feature and ii) second information indicating at least one multiple access (MA) signature value based on the at least one UL NOMA transmission feature.

According to another embodiment of the present disclosure, a method performed by a second station (STA) in a wireless LAN system may include transmitting a trigger frame to a first STA; and receiving a trigger-based (TB) physical layer protocol data unit (PPDU) from the first STA based on the trigger frame, and the trigger frames may include i) first information related to at least one uplink (UL) non-orthogonal multiple access (NOMA) transmission feature and ii) second information indicating at least one multiple access (MA) signature value based on the at least one UL NOMA transmission feature.

### [Technical Effects]

According to various embodiments of the present disclosure, a method and device for transmitting and receiving a PPDU based on a trigger frame in a wireless LAN system may be provided.

According to various embodiments of the present disclosure, a method and device for transmitting and receiving a trigger frame including information related to NOMA-based transmission may be provided.

According to various embodiments of the present disclosure, a method for transmitting a NOMA-based TB (trigger based) PPDU based on a trigger frame by a plurality of NOMA STAs may be provided.

Effects achievable by the present disclosure are not limited to the above-described effects, and other effects which are not described herein may be clearly understood by those skilled in the pertinent art from the following description.

### [Description of Diagrams]

Accompanying drawings included as part of detailed description for understanding the present disclosure provide embodiments of the present disclosure and describe technical features of the present disclosure with detailed description.
FIG. 1 illustrates a block configuration diagram of a wireless communication device according to an embodiment of the present disclosure.
FIG. 2 is a diagram illustrating an exemplary structure of a WLAN system to which the present disclosure may be applied.
FIG. 3 is a diagram for describing a link setup process to which the present disclosure may be applied.
FIG. 4 is a diagram for describing a backoff process to which the present disclosure may be applied.
FIG. 5 is a diagram for describing a frame transmission operation based on CSMA/CA to which the present disclosure may be applied.
FIG. 6 is a diagram for describing an example of a frame structure used in a WLAN system to which the present disclosure may be applied.
FIG. 7 is a diagram illustrating examples of PPDUs defined in the IEEE 802.11 standard to which the present disclosure may be applied.
FIG. 8 illustrates an exemplary format of a trigger frame to which the present disclosure can be applied.
FIG. 9 is a flowchart for describing the operation of the first STA according to an embodiment of the present disclosure.
FIG. 10 is a diagram for describing the operation of the second STA according to an embodiment of the present disclosure.
FIG. 11 is a diagram for describing the configuration of a common information field of a trigger frame according to an embodiment of the present disclosure.
FIG. 12 is a diagram for describing a method for indicating a UL NOMA transmission method through a trigger frame according to an embodiment of the present disclosure.
FIG. 13 is a diagram for explaining a TB PPDU transmission and reception procedure between a transmitting STA and a receiving STA according to an example of the present disclosure.

### [Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

Examples of the present disclosure may be applied to various wireless communication systems. For example, examples of the present disclosure may be applied to a wireless LAN system. For example, examples of the present disclosure may be applied to an IEEE 802.11a/g/n/ac/ax standards-based wireless LAN. Furthermore, examples of the present disclosure may be applied to a wireless LAN based on the newly proposed IEEE 802.11be (or EHT) standard. Examples of the present disclosure may be applied to an IEEE 802.11be Release-2 standard-based wireless LAN corresponding to an additional enhancement technology of the IEEE 802.11be Release-1 standard. Additionally, examples of the present disclosure may be applied to a next-generation standards-based wireless LAN after IEEE 802.11be. Further, examples of this disclosure may be applied to a cellular wireless communication system. For example, it may be applied to a cellular wireless communication system based on Long Term Evolution (LTE)-based technology and 5G New Radio (NR)-based technology of the 3rd Generation Partnership Project (3GPP) standard.

Hereinafter, technical features to which examples of the present disclosure may be applied will be described.

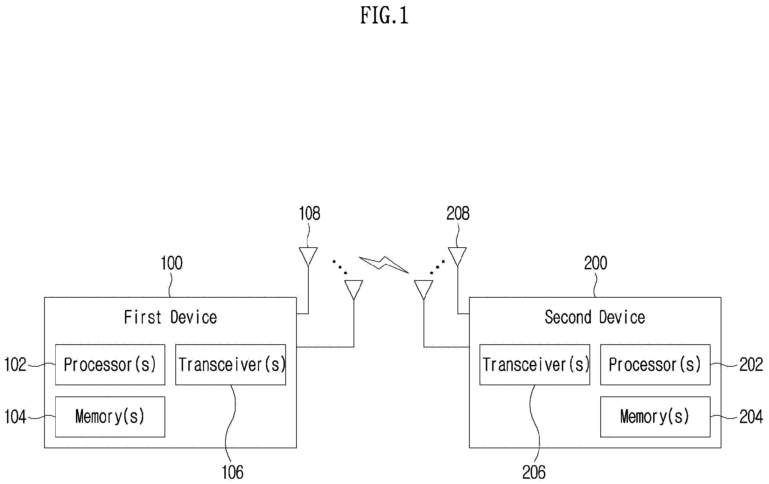

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

The devices 100 and 200 illustrated in FIG. 1 may be referred to as stations (STAs). For example, the devices 100 and 200 illustrated in FIG. 1 may be referred to by various terms such as a transmitting device, a receiving device, a transmitting STA, and a receiving STA. For example, the STAs 110 and 200 may perform an access point (AP) role or a non-AP role. That is, in the present disclosure, the STAs 110 and 200 may perform functions of an AP and/or a non-AP. When the STAs 110 and 200 perform an AP function, they may be simply referred to as APs, and when the STAs 110 and 200 perform non-AP functions, they may be simply referred to as STAs. In addition, in the present disclosure, an AP may also be indicated as an AP STA.

Referring to FIG. 1, the first device 100 and the second device 200 may transmit and receive radio signals through various wireless LAN technologies (e.g., IEEE 802.11 series). The first device 100 and the second device 200 may include an interface for a medium access control (MAC) layer and a physical layer (PHY) conforming to the IEEE 802.11 standard.

In addition, the first device 100 and the second device 200 may additionally support various communication standards (e.g., 3GPP LTE series, 5G NR series standards, etc.) technologies other than wireless LAN technology. In addition, the device of the present disclosure may be implemented in various devices such as a mobile phone, a vehicle, a personal computer, augmented reality (AR) equipment, and virtual reality (VR) equipment, etc. In addition, the STA of the present specification may support various communication services such as a voice call, a video call, data communication, autonomous-driving, machine-type communication (MTC), machine-to-machine (M2M), device-to-device (D2D), IoT (Internet-of-Things), etc.

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless LAN technology (e.g., IEEE 802.11 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless LAN technology (e.g., IEEE 802.11 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs (Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, one of the STAs 100 and 200 may perform an intended operation of an AP, and the other of the STAs 100 and 200 may perform an intended operation of a non-AP STA. For example, the transceivers 106 and 206 of FIG. 1 may perform a transmission and reception operation of a signal (e.g., a packet or a physical layer protocol data unit (PPDU) conforming to IEEE 802.11a/b/g/n/ac/ax/be). In addition, in the present disclosure, an operation in which various STAs generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields (signal (SIG), short training field (STF), long training field (LTF), Data, etc.) included in the PPDU, 2) determining / configuring / acquiring time resources or frequency resources (e.g., subcarrier resources) used for fields (SIG, STF, LTF, Data, etc.) included in the PPDU; 3) determining / configuring / acquiring a specific sequence (e.g., pilot sequence, STF/LTF sequence, extra sequence applied to SIG) used for fields (SIG, STF, LTF, Data, etc.) included in the PPDU action, 4) power control operation and/or power saving operation applied to the STA, 5) Operations related to ACK signal determination/acquisition/configuration/calculation/decodin g/encoding, etc. In addition, in the following example, various information (e.g., information related to fields / subfields / control fields / parameters / power, etc.) used by various STAs to determine / acquire / configure / calculate / decode / encode transmission and reception signals may be stored in the memories 104 and 204 of FIG. 1.

Hereinafter, downlink (DL) may mean a link for communication from an AP STA to a non-AP STA, and a DL PPDU / packet / signal may be transmitted and received through the DL. In DL communication, a transmitter may be part of an AP STA, and a receiver may be part of a non-AP STA. Uplink (UL) may mean a link for communication from non-AP STAs to AP STAs, and a UL PPDU / packet / signal may be transmitted and received through the UL. In UL communication, a transmitter may be part of a non-AP STA, and a receiver may be part of an AP STA.

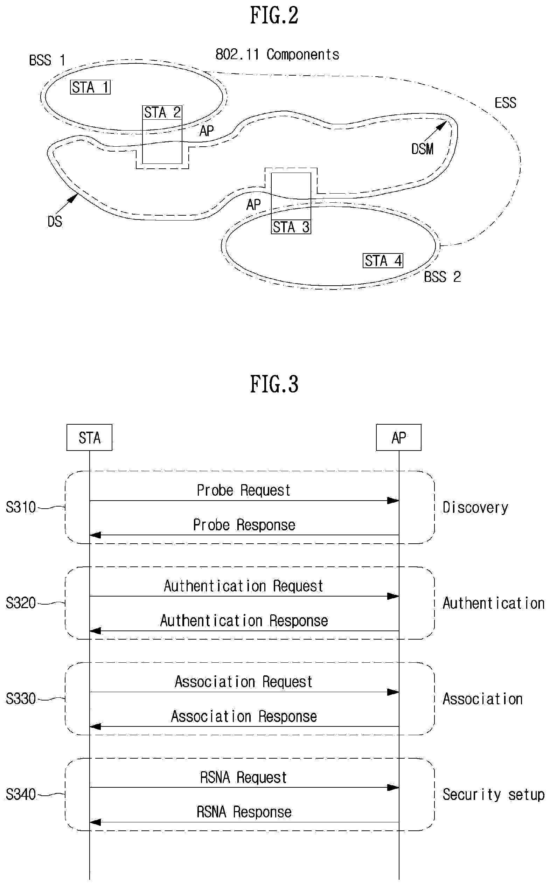

FIG. 2 is a diagram illustrating an exemplary structure of a wireless LAN system to which the present disclosure may be applied.

The structure of the wireless LAN system may consist of be composed of a plurality of components. A wireless LAN supporting STA mobility transparent to an upper layer may be provided by interaction of a plurality of components. A Basic Service Set (BSS) corresponds to a basic construction block of a wireless LAN. FIG. 2 exemplarily shows that two BSSs (BSS1 and BSS2) exist and two STAs are included as members of each BSS (STA1 and STA2 are included in BSS1, and STA3 and STA4 are included in BSS2). An ellipse representing a BSS in FIG. 2 may also be understood as representing a coverage area in which STAs included in the corresponding BSS maintain communication. This area may be referred to as a Basic Service Area (BSA). When an STA moves out of the BSA, it may not directly communicate with other STAs within the BSA.

If the DS shown in FIG. 2 is not considered, the most basic type of BSS in a wireless LAN is an independent BSS (IBSS). For example, IBSS may have a minimal form containing only two STAs. For example, assuming that other components are omitted, BSS1 containing only STA1 and STA2 or BSS2 containing only STA3 and STA4 may respectively correspond to representative examples of IBSS. This configuration is possible when STAs may communicate directly without an AP. In addition, in this type of wireless LAN, it is not configured in advance, but may be configured when a LAN is required, and this may be referred to as an ad-hoc network. Since the IBSS does not include an AP, there is no centralized management entity. That is, in IBSS, STAs are managed in a distributed manner. In IBSS, all STAs may be made up of mobile STAs, and access to the distributed system (DS) is not allowed, forming a self-contained network.

Membership of an STA in the BSS may be dynamically changed by turning on or off the STA, entering or exiting the BSS area, and the like. To become a member of the BSS, the STA may join the BSS using a synchronization process. In order to access all services of the BSS infrastructure, the STA shall be associated with the BSS. This association may be dynamically established and may include the use of a Distribution System Service (DSS).

A direct STA-to-STA distance in a wireless LAN may be limited by PHY performance. In some cases, this distance limit may be sufficient, but in some cases, communication between STAs at a longer distance may be required. A distributed system (DS) may be configured to support extended coverage.

DS means a structure in which BSSs are interconnected. Specifically, as shown in FIG. 2, a BSS may exist as an extended form of a network composed of a plurality of BSSs. DS is a logical concept and may be specified by the characteristics of Distributed System Media (DSM). In this regard, a wireless medium (WM) and a DSM may be logically separated. Each logical medium is used for a different purpose and is used by different components. These medium are not limited to being the same, nor are they limited to being different. In this way, the flexibility of the wireless LAN structure (DS structure or other network structure) may be explained in that a plurality of media are logically different. That is, the wireless LAN structure may be implemented in various ways, and the corresponding wireless LAN structure may be independently specified by the physical characteristics of each embodiment.

A DS may support a mobile device by providing seamless integration of a plurality of BSSs and providing logical services necessary to address an address to a destination. In addition, the DS may further include a component called a portal that serves as a bridge for connection between the wireless LAN and other networks (e.g., IEEE 802.X).

The AP enables access to the DS through the WM for the associated non-AP STAs, and means an entity that also has the functionality of an STA. Data movement between the BSS and the DS may be performed through the AP. For example, STA2 and STA3 shown in FIG. 2 have the functionality of STAs, and provide a function allowing the associated non-AP STAs (STA1 and STA4) to access the DS. In addition, since all APs basically correspond to STAs, all APs are addressable entities. The address used by the AP for communication on the WM and the address used by the AP for communication on the DSM are not necessarily the same. A BSS composed of an AP and one or more STAs may be referred to as an infrastructure BSS.

Data transmitted from one of the STA(s) associated with an AP to a STA address of the corresponding AP may be always received on an uncontrolled port and may be processed by an IEEE 802.1X port access entity. In addition, when a controlled port is authenticated, transmission data (or frames) may be delivered to the DS.

In addition to the structure of the DS described above, an extended service set (ESS) may be configured to provide wide coverage.

An ESS means a network in which a network having an arbitrary size and complexity is composed of DSs and BSSs. The ESS may correspond to a set of BSSs connected to one DS. However, the ESS does not include the DS. An ESS network is characterized by being seen as an IBSS in the Logical Link Control (LLC) layer. STAs included in the ESS may communicate with each other, and mobile STAs may move from one BSS to another BSS (within the same ESS) transparently to the LLC. APs included in one ESS may have the same service set identification (SSID). The SSID is distinguished from the BSSID, which is an identifier of the BSS.

The wireless LAN system does not assume anything about the relative physical locations of BSSs, and all of the following forms are possible. BSSs may partially overlap, which is a form commonly used to provide continuous coverage. In addition, BSSs may not be physically connected, and logically there is no limit on the distance between BSSs. In addition, the BSSs may be physically located in the same location, which may be used to provide redundancy. In addition, one (or more than one) IBSS or ESS networks may physically exist in the same space as one (or more than one) ESS network. When an ad-hoc network operates in a location where an ESS network exists, when physically overlapping wireless networks are configured by different organizations, or when two or more different access and security policies are required in the same location, this may correspond to the form of an ESS network in the like.

FIG. 3 is a diagram for explaining a link setup process to which the present disclosure may be applied.

In order for an STA to set up a link with respect to a network and transmit/receive data, it first discovers a network, performs authentication, establishes an association, and need to perform the authentication process for security. The link setup process may also be referred to as a session initiation process or a session setup process. In addition, the processes of discovery, authentication, association, and security setting of the link setup process may be collectively referred to as an association process.

In step S310, the STA may perform a network discovery operation. The network discovery operation may include a scanning operation of the STA. That is, in order for the STA to access the network, it needs to find a network in which it can participate. The STA shall identify a compatible network before participating in a wireless network, and the process of identifying a network existing in a specific area is called scanning.

Scanning schemes include active scanning and passive scanning. FIG. 3 exemplarily illustrates a network discovery operation including an active scanning process. In active scanning, an STA performing scanning transmits a probe request frame to discover which APs exist around it while moving channels and waits for a response thereto. A responder transmits a probe response frame as a response to the probe request frame to the STA that has transmitted the probe request frame. Here, the responder may be an STA that last transmitted a beacon frame in the BSS of the channel being scanned. In the BSS, since the AP transmits the beacon frame, the AP becomes a responder, and in the IBSS, the STAs in the IBSS rotate to transmit the beacon frame, so the responder is not constant. For example, a STA that transmits a probe request frame on channel 1 and receives a probe response frame on channel 1, may store BSS-related information included in the received probe response frame and may move to the next channel (e.g., channel 2) and perform scanning (i.e., transmission/reception of a probe request/response on channel 2) in the same manner.

Although not shown in FIG. 3, the scanning operation may be performed in a passive scanning manner. In passive scanning, a STA performing scanning waits for a beacon frame while moving channels. The beacon frame is one of the management frames defined in IEEE 802.11, and is periodically transmitted to notify the existence of a wireless network and to allow the STA performing scanning to find a wireless network and participate in the wireless network. In the BSS, the AP serves to transmit beacon frames periodically, and in the IBSS, STAs within the IBSS rotate to transmit beacon frames. When the STA performing scanning receives a beacon frame, the STA stores information for the BSS included in the beacon frame and records beacon frame information in each channel while moving to another channel. The STA receiving the beacon frame may store BSS-related information included in the received beacon frame, move to the next channel, and perform scanning in the next channel in the same way. Comparing active scanning and passive scanning, active scanning has an advantage of having less delay and less power consumption than passive scanning.

After the STA discovers the network, an authentication process may be performed in step S320. This authentication process may be referred to as a first authentication process in order to be clearly distinguished from the security setup operation of step S340 to be described later.

The authentication process includes a process in which the STA transmits an authentication request frame to the AP, and in response to this, the AP transmits an authentication response frame to the STA. An authentication frame used for authentication request/response corresponds to a management frame.

The authentication frame includes an authentication algorithm number, an authentication transaction sequence number, a status code, a challenge text, a robust security network (RSN), and a Finite Cyclic Group, etc. This corresponds to some examples of information that may be included in the authentication request/response frame, and may be replaced with other information or additional information may be further included.

The STA may transmit an authentication request frame to the AP. The AP may determine whether to allow authentication of the corresponding STA based on information included in the received authentication request frame. The AP may provide the result of the authentication process to the STA through an authentication response frame.

After the STA is successfully authenticated, an association process may be performed in step S330. The association process includes a process in which the STA transmits an association request frame to the AP, and in response, the AP transmits an association response frame to the STA.

For example, the association request frame may include information related to various capabilities, a beacon listen interval, a service set identifier (SSID), supported rates, supported channels, RSN, mobility domain, supported operating classes, Traffic Indication Map Broadcast request (TIM broadcast request), interworking service capability, etc. For example, the association response frame may include information related to various capabilities, status code, association ID (AID), supported rates, enhanced distributed channel access (EDCA) parameter set, received channel power indicator (RCPI), received signal to noise indicator (RSNI), mobility domain, timeout interval (e.g., association comeback time), overlapping BSS scan parameters, TIM broadcast response, Quality of Service (QoS) map, etc. This corresponds to some examples of information that may be included in the association request/response frame, and may be replaced with other information or additional information may be further included.

After the STA is successfully associated with the network, a security setup process may be performed in step S340. The security setup process of step S340 may be referred to as an authentication process through Robust Security Network Association (RSNA) request/response, and the authentication process of step S320 is referred to as a first authentication process, and the security setup process of step S340 may also simply be referred to as an authentication process.

The security setup process of step S340 may include, for example, a process of setting up a private key through 4-way handshaking through an Extensible Authentication Protocol over LAN (EAPOL) frame. In addition, the security setup process may be performed according to a security scheme not defined in the IEEE 802.11 standard.

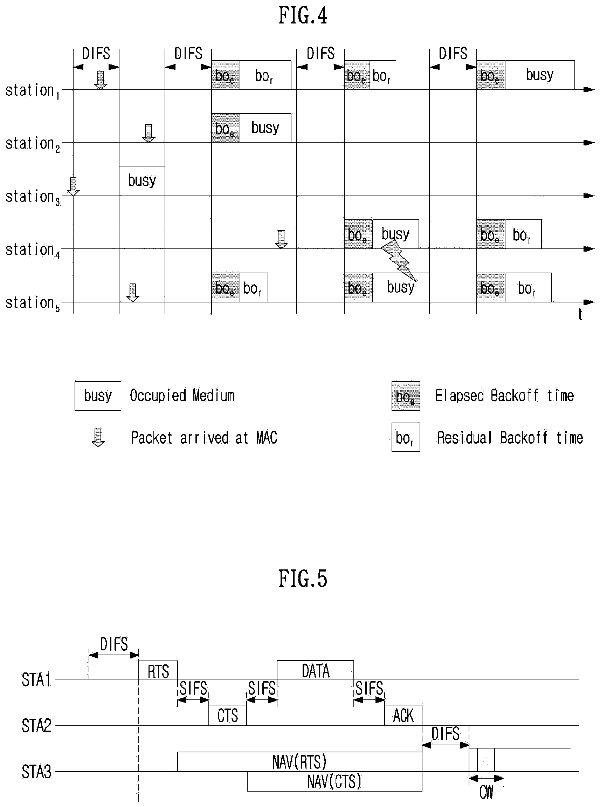

FIG. 4 is a diagram for explaining a backoff process to which the present disclosure may be applied.

In the wireless LAN system, a basic access mechanism of medium access control (MAC) is a carrier sense multiple access with collision avoidance (CSMA/CA) mechanism. The CSMA/CA mechanism is also called Distributed Coordination Function (DCF) of IEEE 802.11 MAC, and basically adopts a "listen before talk" access mechanism. According to this type of access mechanism, the AP and/or STA may perform Clear Channel Assessment (CCA) sensing a radio channel or medium during a predetermined time interval (e.g., DCF Inter-Frame Space (DIFS)), prior to starting transmission. As a result of the sensing, if it is determined that the medium is in an idle state, frame transmission is started through the corresponding medium. On the other hand, if it is detected that the medium is occupied or busy, the corresponding AP and/or STA does not start its own transmission and may set a delay period for medium access (e.g., a random backoff period) and attempt frame transmission after waiting. By applying the random backoff period, since it is expected that several STAs attempt frame transmission after waiting for different periods of time, collision may be minimized.

In addition, the IEEE 802.11 MAC protocol provides a Hybrid Coordination Function (HCF). HCF is based on the DCF and Point Coordination Function (PCF). PCF is a polling-based synchronous access method and refers to a method in which all receiving APs and/or STAs periodically poll to receive data frames. In addition, HCF has Enhanced Distributed Channel Access (EDCA) and HCF Controlled Channel Access (HCCA). EDCA is a contention-based access method for a provider to provide data frames to multiple users, and HCCA uses a non-contention-based channel access method using a polling mechanism. In addition, the HCF includes a medium access mechanism for improving QoS (Quality of Service) of the wireless LAN, and may transmit QoS data in both a Contention Period (CP) and a Contention Free Period (CFP).

Referring to FIG. 4, an operation based on a random backoff period will be described. When the occupied/busy medium changes to an idle state, several STAs may attempt to transmit data (or frames). As a method for minimizing collisions, each of STAs may respectively select a random backoff count and attempt transmission after waiting for a corresponding slot time. The random backoff count has a pseudo-random integer value and may be determined as one of values ranging from 0 to CW. Here, CW is a contention window parameter value. The CW parameter is given CWmin as an initial value, but may take a value twice as large in case of transmission failure (e.g., when an ACK for the transmitted frame is not received). When the CW parameter value reaches CWmax, data transmission may be attempted while maintaining the CWmax value until data transmission is successful, and when data transmission is successful, the CWmin value is reset. The values of CW, CWmin and CWmax are preferably set to 2ⁿ-1 (n = 0, 1, 2, ...).

When the random backoff process starts, the STA continuously monitors the medium while counting down the backoff slots according to the determined backoff count value. When the medium is monitored for occupancy, it stops counting down and waits, and resumes the rest of the countdown when the medium becomes idle.

In the example of FIG. 4, when a packet to be transmitted arrives at the MAC of STA3, STA3 may transmit the frame immediately after confirming that the medium is idle as much as DIFS. The remaining STAs monitor and wait for the medium to be occupied/busy. In the meantime, data to be transmitted may also occur in each of STA1, STA2, and STA5, and each STA waits as long as DIFS when the medium is monitored as idle, and then may perform a countdown of the backoff slot according to the random backoff count value selected by each STA. Assume that STA2 selects the smallest backoff count value and STA1 selects the largest backoff count value. That is, the case where the remaining back-off time of STA5 is shorter than the remaining back-off time of STA1 at the time when STA2 completes the back-off count and starts frame transmission is exemplified. STA1 and STA5 temporarily stop counting down and wait while STA2 occupies the medium. When the occupation of STA2 ends and the medium becomes idle again, STA1 and STA5 wait for DIFS and resume the stopped backoff count. That is, frame transmission may be started after counting down the remaining backoff slots for the remaining backoff time. Since the remaining backoff time of STA5 is shorter than that of STA1, STA5 starts frame transmission. While STA2 occupies the medium, data to be transmitted may also occur in STA4. From the standpoint of STA4, when the medium becomes idle, STA4 may wait for DIFS, and then may perform a countdown according to the random backoff count value selected by the STA4 and start transmitting frames. The example of FIG. 4 shows a case where the remaining backoff time of STA5 coincides with the random backoff count value of STA4 by chance. In this case, a collision may occur between STA4 and STA5. When a collision occurs, both STA4 and STA5 do not receive an ACK, so data transmission fails. In this case, STA4 and STA5 may double the CW value, select a random backoff count value, and perform a countdown. STA1 waits while the medium is occupied due to transmission of STA4 and STA5, waits for DIFS when the medium becomes idle, and then starts frame transmission after the remaining backoff time has elapsed.

As in the example of FIG. 4, the data frame is a frame used for transmission of data forwarded to a higher layer, and may be transmitted after a backoff performed after DIFS elapses from when the medium becomes idle. Additionally, the management frame is a frame used for exchange of management information that is not forwarded to a higher layer, and is transmitted after a backoff performed after an IFS such as DIFS or Point Coordination Function IFS (PIFS). As a subtype frames of management frame, there are a Beacon, an association request/response, a re-association request/response, a probe request/response, an authentication request/response, etc. A control frame is a frame used to control access to a medium. As a subtype frames of control frame, there are Request-To-Send (RTS), Clear-To-Send (CTS), Acknowledgement (ACK), Power Save-Poll (PS-Poll), block ACK (BlockAck), block ACK request (BlockACKReq), null data packet announcement (NDP announcement), and trigger, etc. If the control frame is not a response frame of the previous frame, it is transmitted after backoff performed after DIFS elapses, and if it is a response frame of the previous frame, it is transmitted without performing backoff after short IFS (SIFS) elapses. The type and subtype of the frame may be identified by a type field and a subtype field in a frame control (FC) field.

A Quality of Service (QoS) STA may perform the backoff that is performed after an arbitration IFS (AIFS) for an access category (AC) to which the frame belongs, that is, AIFS[i] (where i is a value determined by AC), and then may transmit the frame. Here, the frame in which AIFS[i] can be used may be a data frame, a management frame, or a control frame other than a response frame.

FIG. 5 is a diagram for explaining a frame transmission operation based on CSMA/CA to which the present disclosure may be applied.

As described above, the CSMA/CA mechanism includes virtual carrier sensing in addition to physical carrier sensing in which a STA directly senses a medium. Virtual carrier sensing is intended to compensate for problems that may occur in medium access, such as a hidden node problem. For virtual carrier sensing, the MAC of the STA may use a Network Allocation Vector (NAV). The NAV is a value indicating, to other STAs, the remaining time until the medium is available for use by an STA currently using or having the right to use the medium. Therefore, the value set as NAV corresponds to a period in which the medium is scheduled to be used by the STA transmitting the frame, and the STA receiving the NAV value is prohibited from accessing the medium during the corresponding period. For example, the NAV may be configured based on the value of the "duration" field of the MAC header of the frame.

In the example of FIG. 5, it is assumed that a STA1 intends to transmit data to a STA2, and a STA3 is in a position capable of overhearing some or all of frames transmitted and received between the STA1 and the STA2.

In order to reduce the possibility of collision of transmissions of multiple STAs in CSMA/CA based frame transmission operation, a mechanism using RTS/CTS frames may be applied. In the example of FIG. 5, while transmission of the STA1 is being performed, as a result of carrier sensing of the STA3, it may be determined that the medium is in an idle state. That is, the STA1 may correspond to a hidden node to the STA3. Alternatively, in the example of FIG. 5, it may be determined that the carrier sensing result medium of the STA3 is in an idle state while transmission of the STA2 is being performed. That is, the STA2 may correspond to a hidden node to the STA3. Through the exchange of RTS / CTS frames before performing data transmission and reception between the STA1 and the STA2, a STA outside the transmission range of one of the STA1 or the STA2, or a STA outside the carrier sensing range for transmission from the STA1 or the STA3 may not attempt to occupy the channel during data transmission and reception between the STA1 and the STA2.

Specifically, the STA1 may determine whether a channel is being used through carrier sensing. In terms of physical carrier sensing, the STA1 may determine a channel occupation idle state based on an energy level or signal correlation detected in a channel. In addition, in terms of virtual carrier sensing, the STA1 may determine a channel occupancy state using a network allocation vector (NAV) timer.

The STA1 may transmit an RTS frame to the STA2 after performing a backoff when the channel is in an idle state during DIFS. When the STA2 receives the RTS frame, the STA2 may transmit a CTS frame as a response to the RTS frame to the STA1 after SIFS.

If the STA3 cannot overhear the CTS frame from the STA2 but can overhear the RTS frame from the STA1, the STA3 may set a NAV timer for a frame transmission period (e.g., SIFS + CTS frame + SIFS + data frame + SIFS + ACK frame) that is continuously transmitted thereafter, using the duration information included in the RTS frame. Alternatively, if the STA3 can overhear a CTS frame from the STA2 although the STA3 cannot overhear an RTS frame from the STA1, the STA3 may set a NAV timer for a frame transmission period (e.g., SIFS + data frame + SIFS + ACK frame) that is continuously transmitted thereafter, using the duration information included in the CTS frame. That is, if the STA3 can overhear one or more of the RTS or CTS frames from one or more of the STA1 or the STA2, the STA3 may set the NAV accordingly. When the STA3 receives a new frame before the NAV timer expires, the STA3 may update the NAV timer using duration information included in the new frame. The STA3 does not attempt channel access until the NAV timer expires.

When the STA1 receives the CTS frame from the STA2, the STA1 may transmit the data frame to the STA2 after SIFS from the time point when the reception of the CTS frame is completed. When the STA2 successfully receives the data frame, the STA2 may transmit an ACK frame as a response to the data frame to the STA1 after SIFS. The STA3 may determine whether the channel is being used through carrier sensing when the NAV timer expires. When the STA3 determines that the channel is not used by other terminals during DIFS after expiration of the NAV timer, the STA3 may attempt channel access after a contention window (CW) according to a random backoff has passed.

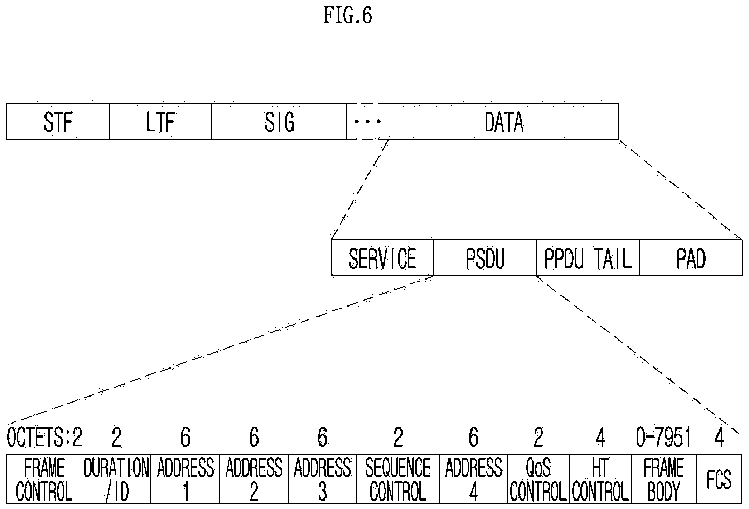

FIG. 6 is a diagram for explaining an example of a frame structure used in a WLAN system to which the present disclosure may be applied.

By means of an instruction or primitive (meaning a set of instructions or parameters) from the MAC layer, the PHY layer may prepare a MAC PDU (MPDU) to be transmitted. For example, when a command requesting transmission start of the PHY layer is received from the MAC layer, the PHY layer switches to the transmission mode and configures information (e.g., data) provided from the MAC layer in the form of a frame and transmits it. In addition, when the PHY layer detects a valid preamble of the received frame, the PHY layer monitors the header of the preamble and sends a command notifying the start of reception of the PHY layer to the MAC layer.

In this way, information transmission/reception in a wireless LAN system is performed in the form of a frame, and for this purpose, a PHY layer protocol data unit (PPDU) frame format is defined.

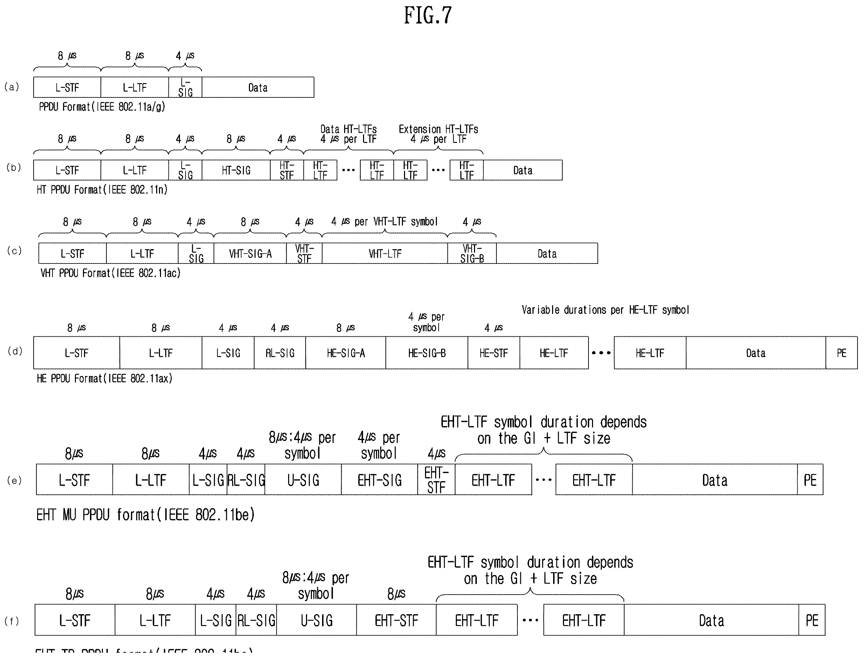

A basic PPDU may include a Short Training Field (STF), Long Training Field (LTF), SIGNAL (SIG) field, and Data (Data) field. The most basic PPDU format (e.g., non-HT (High Throughput) shown in FIG. 7) may consist of only the Legacy-STF (L-STF), Legacy-LTF (L-LTF), Legacy-SIG (L-SIG) fields, and data fields. Additionally, depending on the type of PPDU format (e.g., HT-mixed format PPDU, HT-greenfield format PPDU, VHT (Very High Throughput) PPDU, etc.), additional (or different types) of RL-SIG, U-SIG, non-legacy SIG fields, non-legacy STF, non-legacy LTF (i.e., xx-SIG, xx-STF, xx-LTF (e.g. xx is HT, VHT, HE, EHT, etc.)), etc. may be included between the L-SIG field and the data field.

The STF is a signal for signal detection, automatic gain control (AGC), diversity selection, precise time synchronization, and the like, and the LTF is a signal for channel estimation and frequency error estimation. The STF and LTF may be referred to as signals for synchronization and channel estimation of the OFDM physical layer.

The SIG field may include various information related to PPDU transmission and reception. For example, the L-SIG field consists of 24 bits and the L-SIG field may include 4-bit Rate field, 1-bit Reserved bit, 12-bit Length field, 1-bit Parity field, and 6-bit Tail field. The RATE field may include information about the modulation and coding rate of data. For example, the 12-bit Length field may include information about the length or time duration of the PPDU. For example, the value of the 12-bit Length field may be determined based on the type of PPDU. For example, for non-HT, HT, VHT, or EHT PPDU, the value of the Length field may be determined to be a multiple of 3. For example, for a HE PPDU, the value of the Length field may be determined as a multiple of 3 + 1 or a multiple of 3 + 2.

The data field may include a SERVICE field, a physical layer service data unit (PSDU), and a PPDU TAIL bit, and may also include padding bits if necessary. Some bits of the SERVICE field may be used for synchronization of the descrambler at the receiving end. The PSDU corresponds to the MAC PDU defined in the MAC layer, and may include data generated/used in the upper layer. The PPDU TAIL bit may be used to return the encoder to a 0 state. Padding bits may be used to adjust the length of a data field in a predetermined unit.

A MAC PDU is defined according to various MAC frame formats, and a basic MAC frame consists of a MAC header, a frame body, and a Frame Check Sequence (FCS). The MAC frame may consist of MAC PDUs and be transmitted/received through the PSDU of the data part of the PPDU frame format.

The MAC header includes a Frame Control field, a Duration/ID field, an Address field, and the like. The frame control field may include control information required for frame transmission/reception. The duration/ID field may be set to a time for transmitting a corresponding frame or the like. For details of the Sequence Control, QoS Control, and HT Control subfields of the MAC header, refer to the IEEE 802.11 standard document.

The null-data PPDU (NDP) format refers to a PPDU format that does not include a data field. In other words, NDP refers to a frame format that includes the PPDU preamble in a general PPDU format (i.e., L-STF, L-LTF, L-SIG fields, and additionally non-legacy SIG, non-legacy STF, non-legacy LTF if present) and does not include the remaining part (i.e., data field).

FIG. 7 is a diagram illustrating examples of PPDUs defined in the IEEE 802.11 standard to which the present disclosure may be applied.

In standards such as IEEE 802.11a/g/n/ac/ax, various types of PPDUs have been used. The basic PPDU format (IEEE 802.11a/g) includes L-LTF, L-STF, L-SIG and Data fields. The basic PPDU format may also be referred to as a non-HT PPDU format(as shown in FIG. 7(a)).

The HT PPDU format (IEEE 802.11n) additionally includes HT-SIG, HT-STF, and HT-LFT(s) fields to the basic PPDU format. The HT PPDU format shown in FIG. 7(b) may be referred to as an HT-mixed format. In addition, an HT-greenfield format PPDU may be defined, and this corresponds to a format consisting of HT-GF-STF, HT-LTF1, HT-SIG, one or more HT-LTF, and Data field, not including L-STF, L-LTF, and L-SIG (not shown).

An example of the VHT PPDU format (IEEE 802.11ac) additionally includes VHT SIG-A, VHT-STF, VHT-LTF, and VHT-SIG-B fields to the basic PPDU format(as shown in FIG. 7(c)).

An example of the HE PPDU format (IEEE 802.11ax) additionally includes Repeated L-SIG (RL-SIG), HE-SIG-A, HE-SIG-B, HE-STF, HE-LTF(s), Packet Extension (PE) field to the basic PPDU format(as shown in FIG 7(d)). Some fields may be excluded or their length may vary according to detailed examples of the HE PPDU format. For example, the HE-SIG-B field is included in the HE PPDU format for multi-user (MU), and the HE-SIG-B is not included in the HE PPDU format for single user (SU). In addition, the HE trigger-based (TB) PPDU format does not include the HE-SIG-B, and the length of the HE-STF field may vary to 8 us. The Extended Range (HE ER) SU PPDU format does not include the HE-SIG-B field, and the length of the HE-SIG-A field may vary to 16us. For example, RL-SIG may be configured the same as L-SIG. The receiving STA can know that the received PPDU is a HE PPDU or an EHT PPDU, which will be described later, based on the presence of the RL-SIG.

The EHT PPDU format may include the EHT MU (multi-user) in FIG. 7(e) and the EHT TB (trigger-based) PPDU in FIG. 7(f). The EHT PPDU format is similar to the HE PPDU format in that it includes RL-SIG followed by L-SIG, but may include U(universal)-SIG, EHT-SIG, EHT-STF, and EHT-LTF following RL-SIG.

The EHT MU PPDU in FIG. 7(e) corresponds to a PPDU carrying one or more data (or PSDU) for one or more users. That is, the EHT MU PPDU may be used for both SU transmission and MU transmission. For example, the EHT MU PPDU may correspond to a PPDU for one receiving STA or multiple receiving STAs.

The EHT TB PPDU in FIG. 7(f) omits the EHT-SIG compared to the EHT MU PPDU. An STA that receives a trigger (e.g., trigger frame or triggered response scheduling (TRS)) for UL MU transmission may perform UL transmission based on the EHT TB PPDU format.

L-STF, L-LTF, L-SIG, RL-SIG, U-SIG (Universal SIGNAL), EHT-SIG fields may be encoded and modulated so that even legacy STAs may attempt demodulation and decoding, and may be mapped based on a determined subcarrier frequency interval (e.g., 312.5 kHz). These may be referred to as pre-EHT modulated fields. Next, the EHT-STF, EHT-LTF, Data, PE fields may be encoded and modulated to be demodulated and decoded by an STA that successfully decodes the non-legacy SIG (e.g., U-SIG and/or EHT-SIG) and obtains the information included in the field, and may be mapped based on a determined subcarrier frequency interval (e.g., 78.125kHz). These may be referred to as EHT modulated fields.

Similarly, in the HE PPDU format, the L-STF, L-LTF, L-SIG, RL-SIG, HE-SIG-A, and HE-SIG-B fields may be referred to as pre-HE modulation fields, and the HE-STF, HE-LTF, Data, and PE fields may be referred to as HE modulation fields. Additionally, in the VHT PPDU format, the L-STF, L-LTF, L-SIG, and VHT-SIG-A fields may be referred to as free VHT modulation fields, and VHT STF, VHT-LTF, VHT-SIG-B, and Data fields may be referred to as VHT modulation fields.

The U-SIG included in the EHT PPDU format of FIG. 7 may be configured based on, for example, two symbols (e.g., two consecutive OFDM symbols). Each symbol (e.g., OFDM symbol) for U-SIG may have a duration of 4us, and U-SIG may have a total duration of 8us. Each symbol of U-SIG may be used to transmit 26 bits of information. For example, each symbol of U-SIG can be transmitted and received based on 52 data tones and 4 pilot tones.

U-SIG may be constructed in units of 20 MHz. For example, if an 80 MHz PPDU is constructed, the U-SIG may be duplicated. That is, the same 4 U-SIGs may be included in the 80 MHz PPDU. PPDUs exceeding 80 MHz bandwidth may include different U-SIGs.

For example, A number of uncoded bits may be transmitted through U-SIG, the first symbol of U-SIG (e.g., U-SIG-1 symbol) may transmit the first X bits of information out of the total A bits of information, and the second symbol of U-SIG (e.g., U-SIG-2 symbol) may transmit the remaining Y bit information of the total A bit information. A-bit information (e.g., 52 uncoded bits) may include a CRC field (e.g., a 4-bit long field) and a tail field (e.g., a 6-bit long field). For example, the tail field may be used to terminate the trellis of the convolutional decoder and may be set to 0.

A bit information transmitted by U-SIG may be divided into version-independent bits and version-dependent bits. For example, U-SIG may be included in a new PPDU format not shown in FIG. 7 (e.g., UHR PPDU format), and in the format of the U-SIG field included in the EHT PPDU format and the format of the U-SIG field included in the UHR PPDU format, version-independent bits may be the same, and some or all of the version-dependent bits may be different.

For example, the size of the version-independent bits of U-SIG may be fixed or variable. Version-independent bits may be assigned only to the U-SIG-1 symbol, or to both the U-SIG-1 symbol and the U-SIG-2 symbol. Version-independent bits and version-dependent bits may be called various names, such as first control bit and second control bit.

For example, the version-independent bits of U-SIG may include a 3-bit physical layer version identifier (PHY version identifier), and this information may indicate the PHY version (e.g., EHT, UHR, etc.) of the transmitted/received PPDU. The version-independent bits of U-SIG may include a 1-bit UL/DL flag field. The first value of the 1-bit UL/DL flag field is related to UL communication, and the second value of the UL/DL flag field is related to DL communication. The version-independent bits of U-SIG may include information about the length of transmission opportunity (TXOP) and information about the BSS color ID.

For example, the version-dependent bits of U-SIG may include information directly or indirectly indicating the type of PPDU (e.g., SU PPDU, MU PPDU, TB PPDU, etc.).

Information necessary for PPDU transmission and reception may be included in U-SIG. For example, U-SIG may further include information about whether information on bandwidth, information on the MCS technique applied to the non-legacy SIG (e.g., EHT-SIG or UHR-SIG, etc.), information indicating whether the DCM (dual carrier modulation) technique (e.g., a technique to achieve an effect similar to frequency diversity by reusing the same signal on two subcarriers) is applied to the non-legacy SIG, information on the number of symbols used for the non-legacy SIG, non-legacy SIG is generated across the entire band.

Some of the information required for PPDU transmission and reception may be included in U-SIG and/or non-legacy SIG (e.g., EHT-SIG or UHR-SIG, etc.). For example, information on the type of non-legacy LTF/STF (e.g., EHT-LTF/EHT-STF or UHR-LTF/UHR-STF, etc.), information on the length of the non-legacy LTF and CP (cyclic prefix) length, information on GI (guard interval) applicable to non-legacy LTF, information on preamble puncturing applicable to PPDU, information on RU (resource unit) allocation, etc. may be included only in the U-SIG, only in the non-legacy SIG, or may be indicated by a combination of information included in the U-SIG and information included in the non-legacy SIG.

Preamble puncturing may mean transmission of a PPDU in which a signal does not exist in one or more frequency units among the bandwidth of the PPDU. For example, the size of the frequency unit (or resolution of preamble puncturing) may be defined as 20MHz, 40MHz, etc. For example, preamble puncturing may be applied to a PPDU bandwidth of a predetermined size or more.

In the example of FIG. 7, non-legacy SIGs such as HE-SIG-B and EHT-SIG may include control information for the receiving STA. A non-legacy SIG may be transmitted over at least one symbol, and one symbol may have a length of 4us. Information about the number of symbols used for the EHT-SIG may be included in previous SIGs (e.g., HE-SIG-A, U-SIG, etc.).

Non-legacy SIGs such as HE-SIG-B and EHT-SIG may include common fields and user-specific fields. Common fields and user-specific fields may be coded separately.

In some cases, common fields may be omitted. For example, in a compression mode where non-OFDMA (orthogonal frequency multiple access) is applied, the common field may be omitted, and multiple STAs may receive a PPDU (e.g., a data field of the PPDU) through the same frequency band. In a non-compressed mode where OFDMA is applied, multiple users may receive a PPDU (e.g., a data field of the PPDU) through different frequency bands.

The number of user-specific fields may be determined based on the number of users. One user block field may include up to two user fields. Each user field may be associated with a MU-MIMO allocation or may be associated with a non-MU-MIMO allocation.

The common field may include a CRC bit and a Tail bit, and the length of the CRC bit may be determined to be 4 bits, and the length of the Tail bit may be determined to be 6 bits and set to 000000. The common field may include RU allocation information. RU allocation information may include information about the location of the RU to which multiple users (i.e., multiple receiving STAs) are assigned.

RU may include multiple subcarriers (or tones). RU may be used when transmitting signals to multiple STAs based on OFDMA technique. Additionally, RU may be defined even when transmitting a signal to one STA. Resources may be allocated in RU units for non-legacy STF, non-legacy LTF, and Data fields.

An RU of applicable size may be defined according to the PPDU bandwidth. RU may be defined identically or differently for the applied PPDU format (e.g., HE PPDU, EHT PPDU, UHR PPDU, etc.). For example, in the case of 80MHz PPDU, the RU placement of HE PPDU and EHT PPDU may be different. applicable RU size, number of RU, and RU location for each PPDU bandwidth, DC (direct current) subcarrier location and number, null subcarrier location and number, guard subcarrier location and number, etc. may be referred to as a tone-plan. For example, a tone-plan for high bandwidth may be defined in the form of multiple iterations of a low-bandwidth tone-plan.

RUs of various sizes may be defined as 26-tone RU, 52-tone RU, 106-tone RU, 242-tone RU, 484-tone RU, 996-tone RU, 2X996-tone RU, 3X996-tone RU, etc. MRU (multiple RU) is distinguished from a plurality of individual RUs and corresponds to a group of subcarriers composed of a plurality of RUs. For example, one MRU may be defined as 52+26-tone, 106+26-tone, 484+242-tone, 996+484-tone, 996+484+242-tone, 2X996+484-tone, 3X996-tone, or 3X996+484-tone. Additionally, a plurality of RUs constituting one MRU may or may not be continuous in the frequency domain.

The specific size of the RU may be reduced or expanded. Accordingly, the specific size of each RU (i.e., the number of corresponding tones) in the present disclosure is not limiting and is illustrative. Additionally, in the present disclosure, within a predetermined bandwidth (e.g., 20, 40, 80, 160, 320 MHz, ...), the number of RUs may vary depending on the RU size.

The names of each field in the PPDU formats of FIG. 7 are exemplary, and the scope of the present disclosure is not limited by the names. In addition, examples of the present disclosure may be applied to the PPDU format illustrated in FIG. 7 as well as to a new PPDU format in which some fields are excluded and/or some fields are added based on the PPDU formats of FIG. 7.

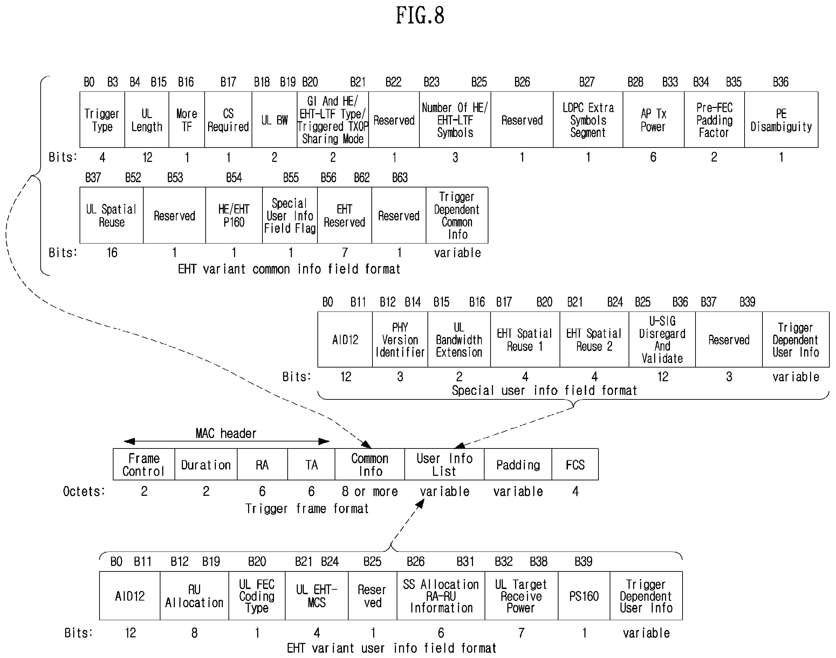

FIG. 8 is a diagram illustrating an example format of a trigger frame to which the present disclosure may be applied.

The trigger frame may allocate resources for transmission of one or more TB PPDUs and request transmission of TB PPDUs. The trigger frame may also include other information required by the STA, which transmits the TB PPDU in response. The trigger frame may include common information and user information list fields in the frame body.

The common info field is information commonly applied to the transmission of one or more TB PPDUs requested by a trigger frame, such as trigger type, UL length, presence or absence of a subsequent trigger frame (e.g., More TF), CS (channel sensing) request, UL BW (bandwidth), HE/EHT P160, special user info field flag, etc.

The 4-bit trigger type subfield may have values from 0 to 15. Among them, the values 0, 1, 2, 3, 4, 5, 6, and 7 of the trigger type subfield are defined to correspond to basic, BFRP (Beamforming Report Poll), MU-BAR (multi user-block acknowledgement request), MU-RTS (multi user-request to send), BSRP (Buffer Status Report Poll), GCR (groupcast with retries) MU-BAR, BQRP (Bandwidth Query Report Poll), and NFRP (NDP Feedback Report Poll), respectively, and the values 8 to 15 are defined as reserved.

Among the common information, the trigger dependent common info subfield may include information that is optionally included based on the trigger type.

A special user info field may be included in the trigger frame. The special user info field does not include user specific information, but includes extended common information that is not provided in the common info field.

The user info list includes zero or more user info fields. FIG. 8 illustrates an example of an EHT variant user info field format.

The AID12 subfield basically indicates that it is a user info field for the STA with the corresponding AID. In addition, if the AID12 field has a specific predetermined value, it may be used for other purposes, such as allocating a random access (RA)-RU or being configured as a special user info field. A special user info field is a user info field that does not include user-specific information but includes extended common information not provided in the common info field. For example, the special user info field may be identified by an AID12 value of 2007, and the special user info field flag subfield within the common info field may indicate whether the special user info field is included.

The RU allocation subfield may indicate the size and location of RU/MRU. For this purpose, the RU allocation subfield may be interpreted together with the PS160 (primary/secondary 160MHz) subfield of the user information field, the UL BW subfield of the common information field, etc.

### Multiple access method for increasing spectrum efficiency

Hereinafter, a multiple access method that can be applied to the embodiments of the present disclosure is described.

Specifically, in order to increase efficient use of allocated channels and channel capacity, application of a non-orthogonal multiple access (NOMA) scheme and/or a semi-orthogonal multiple access (SOMA) scheme may be considered.

For example, in the case of the NOMA method, an AP STA may share frequency resources, time resources, and/or code resources with each non-AP STA, thereby allowing a multiple access method to accommodate a number of STAs with limited resources by allocating non-orthogonal resources. In other words, this may mean a technology to improve frequency efficiency by simultaneously transmitting data for a number of STAs sharing the same resources.

For example, an AP STA may superpose and transmit data signals to a plurality of non-AP STAs, i.e., non-AP STAs located in close proximity and non-AP STAs located in a distant location, with a large difference in channel quality. As a specific example, data for a first STA and data for a second STA may be transmitted in a superposed state on an IQ plane (In-phase and Quadrature plane), which corresponds to a complex plane.

In this regard, low power is assigned to the Non-AP STA located at a short distance, and high power can be assigned to the Non-AP STA located at a distance. In this case, the Non-AP STA, located at a short distance, can be set to successfully recharge its signal after first decryption and removing the interference signal of the non-AP STA located at a long distance of the signal according to the sequential interference cancellation (SIC) technique. In addition, the non-AP STA located at a distant distance is relatively weak that the interference signal of the non-AP STA located at a short range is relatively weak.

As described above, when the NOMA method is applied, signals from multiple users can be overlapped and transmitted for a single time/frequency resource, thereby increasing the transmission capacity of wireless communication. In addition, since simultaneous signal transmission from multiple users is supported, transmission delay time can be reduced.

As mentioned above, signals from other users transmitted to the same resource can generally be considered as interference. However, interference in NOMA is interference that is artificially generated in the system, not environmentally generated. Therefore, when the NOMA method is applied, interference can be controlled by designing a superimposed signal in a form that is as controllable as possible.

In the uplink, spreading-based NOMA techniques have been designed to obtain frequency diversity. Here, the sequence used for spreading is defined as a multiple access signature, which can be used to distinguish each user. Depending on the type of multiple access signature utilized, NOMA methods can be classified into full spreading, sparse spreading, interleaved, and scrambled.

SOMA is a type of NOMA that can contribute to improving downlink performance. SOMA is a method of multiplexing in which one or more STAs share a single constellation and allocate bits in specific situations.

SOMA is different from general multiple access technology in which each STA has a constellation. Here, fairness between STAs can be guaranteed based on the difference in reliability between the bits that make up **QAM.** The system may be operated by allocating bits with high reliability to STAs in distant locations and bits with low reliability to STAs in nearby locations.

### Signaling methods within the NOMA system

The UL NOMA system is designed to improve performance such as throughput and latency in wireless communication systems, and can also be applied to IEEE 802.11-based systems.

The present disclosure specifically describes a protocol for applying a UL NOMA system to an IEEE 802.11-based system and a method for transmitting and receiving the protocol.

As described above, full spreading, sparse spreading, interleaving and scrambling may be applied in the UL NOMA system.

Full spreading technology refers to a technology that repeatedly transmits the same symbol from one or more resources, but sets all elements to not always be **0.** Sparse spreading technology refers to a technology that repeatedly transmits the same symbol from one or more resources, but sets a specific element of a specific user **(e.g.,** a specific STA) to always be **0.** Interleaving refers to a technology that mixes the order of one or more resources where the same symbol can be repeatedly transmitted. Scrambling refers to a technology that enables distinction between users **(i.e.,** STAs) by applying a scrambling sequence to the value corresponding to each element.

The method applied for multiple connections can be distinguished by a signature, and the signature can be used to distinguish users.

In an IEEE 802.11-based system, multi-user UL access may be performed based on a trigger procedure due to timing alignment issues. Similarly, when a UL NOMA-based transmission scheme is applied to an IEEE 802.11-based system, the UL NOMA-based transmission scheme may be performed based on a trigger procedure.

Hereinafter, a protocol for operating a trigger-based NOMA system and a frame format and signaling fields for transmission/operation of the protocol are specifically described.

That is, the present disclosure describes a method and device for operating a UL NOMA system with a trigger-based transmission/reception protocol used in an IEEE 802.11 ax/be-based wireless LAN system. Here, HE/EHT/UHR TB PPDUs can be transmitted and received according to a trigger procedure used in an IEEE 802.11 ax/be-based wireless LAN system.

For example, a frame, format, and field capable of transmitting a multi-access signature are described. At this time, the name or number of bits of each frame, format, and field is not limited to a specific name or a specific bit value, and can be set/defined to another name or another value.

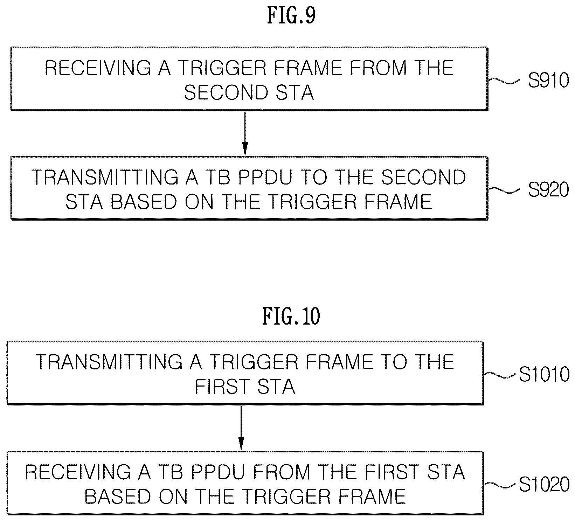

FIG. 9 is a flowchart for describing the operation of the first STA according to one embodiment of the present disclosure. In FIG. 9 and FIG. 10, each of the first STA and the second STA may be implemented as either a non-AP STA or an AP.

The first STA may receive a trigger frame from the second STA (S910).

Then, the first STA may transmit a trigger-based (TB) physical layer protocol data unit (PPDU) to the second STA based on the trigger frame (S920).

As an example of the present disclosure, the common information field of the trigger frame of the trigger frame may include a trigger type subfield. And, the trigger type subfield may indicate that the type of the trigger frame is a trigger frame for triggering NOMA-based transmission. At this time, the value of the trigger type subfield may be set to one of 9 to 15.

That is, the first STA may receive a trigger frame that triggers NOMA-based TB PPDU transmission from the second STA.

Here, the trigger frame may include i) first information related to at least one uplink (UL) non-orthogonal multiple access (NOMA) transmission feature and ii) second information indicating at least one multiple access (MA) signature value based on the at least one UL NOMA transmission feature.

As another example of the present disclosure, the first STA may include third information indicating whether transmission of a TB PPDU based on a trigger frame is performed as NOMA-based transmission. In this case, the type of the trigger frame may be a basic trigger frame.

For example, based on the third information indicating that transmission of the TB PPDU based on the trigger frame is to be performed as NOMA-based transmission, the trigger frame may include the first information and the second information. As another example, based on the third information indicating that transmission of the TB PPDU based on the trigger frame is not to be performed as NOMA-based transmission, areas corresponding to the first information and the second information in the trigger frame may be reserved.

The first information may be indicated by a first field included in a common information field of the trigger frame or a trigger dependent common information field. And, the second information may be indicated by a second field included in a user information field of the trigger frame or a trigger dependent user information field.

And, at least one UL NOMA transmission feature may include at least one of sparse spreading, full spreading, bit level interleave, bit level scramble, symbol level interleave, or symbol level scramble.

Here, the first field may include six 1-bit indication subfields or a single 3-bit indication field indicating whether sparse spreading, full spreading, bit-level interleave, bit-level scrambling, symbol-level interleave, and symbol-level scrambling are applied, respectively.

The first field may be followed by an ultra-high reliability (UHR) variant of the common information field.

Additionally, the common information field or the trigger dependent common information field of the trigger frame may include at least one of a spreading factor subfield or a spreading domain subfield.

At least one MA signature value based on at least one UL NOMA transmission feature indicated by the second information can indicate a pattern related to at least one UL NOMA transmission feature. That is, at least one MA signature value can indicate a UL NOMA transmission pattern. In this case, a UL NOMA transmission pattern corresponding to a specific MA signature value can be defined in advance.

The method performed by the first STA described in the example of FIG. 9 may be performed by the first device (100) of FIG. 1. For example, one or more processors (102) of the first device (100) of FIG. 1 may be configured to receive a trigger frame from a second STA via one or more transceivers (106). The one or more processors (102) may be configured to transmit a TB PPDU to the second STA via one or more transceivers (106) based on the trigger frame.

Furthermore, one or more memories (104) of the first device (100) may store instructions for performing the method described in the example of FIG. 9 when executed by one or more processors (102).

FIG. 10 is a diagram for describing the operation of a second STA according to one embodiment of the present disclosure.

The second STA may transmit a trigger frame to the first STA (S1010).

For example, the second STA may transmit a trigger frame to the first STA to request NOMA-based TB PPDU transmission. Configurations related to NOMA-based TB PPDU transmission may be determined by the first information and the second information.

The first information and the second information have been described with reference to Fig. 9, so any duplicate description will be omitted.

The second STA may receive a TB PPDU from the first STA based on a trigger frame (S1020).

That is, the second STA may receive a NOMA-based TB PPDU from the first STA according to the first information and the second information included in the trigger frame.

The method performed by the second STA as described in the example of FIG. 10 may be performed by the second device (200) of FIG. 1. For example, one or more processors (202) of the second device (200) of FIG. 1 may be configured to transmit a trigger frame to the second STA through one or more transceivers (206). The one or more processors (202) may be configured to receive a TB PPDU to the first STA through one or more transceivers (206) based on the trigger frame.

Furthermore, one or more memories (204) of the second device (200) may store instructions for performing the method described in the example of FIG. 10 when executed by one or more processors (202).

Hereinafter, the configuration of a trigger frame for performing a NOMA system and a procedure based on the trigger frame are described.

### Embodiment 1

Embodiment 1 relates to a configuration of a new trigger frame format for triggering a PPDU to which the UL NOMA method is applied (e.g., UL NOMA UHR TB PPDU, etc.) and a procedure based on the new trigger frame.

The trigger type subfield of a trigger frame for triggering a PPDU to which the UL NOMA method is applied may indicate that the trigger frame is a trigger frame for triggering the NOMA transmission method (i.e., a trigger frame for triggering a NOMA STA).

Hereinafter, the trigger frame for triggering the NOMA transmission method is collectively referred to as a UL NOMA trigger frame. However, this is only an example, and the name of the trigger frame for triggering the NOMA transmission method may be changed in various ways.

For example, if the value of the trigger type subfield is set to one of 8 to 15, this may indicate that the trigger frame is a trigger frame for triggering the NOMA transmission method.

### Embodiment 1-1

A UL NOMA trigger frame may include a common field, and the common field may include a UL NOMA feature subfield, a spreading factor subfield, and a spreading domain subfield.

The UL NOMA feature field may indicate which of the six features of UL NOMA described above (e.g., bit/symbol level interleave, bit/symbol level scramble, full spreading, and sparse spreading) has a UHR TB PPDU transmission request.

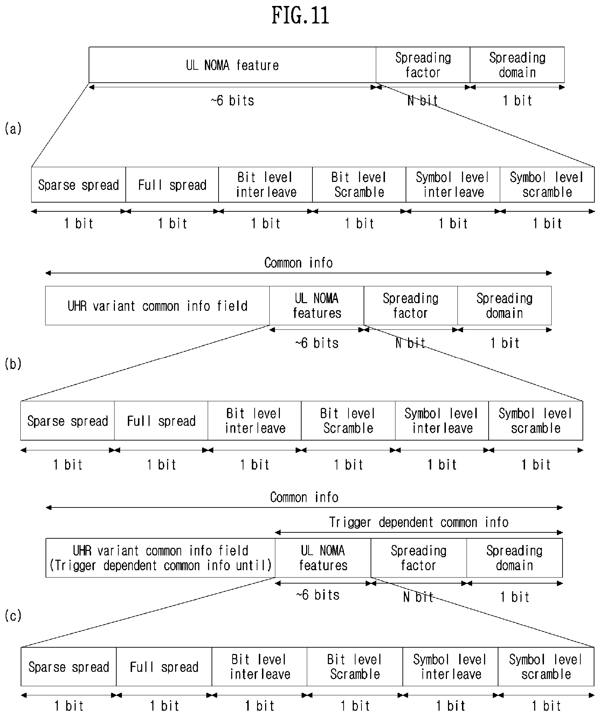

For example, as illustrated in (a) of FIG. 11, the UL NOMA feature field may include a sparse spreading subfield, a full spreading subfield, a bit-level interleaved subfield, a bit-level scrambled subfield, a symbol-level interleaved subfield, and a symbol-level scrambled subfield.

However, this is only one embodiment, and the type of at least one subfield included in the UL NOMA feature field and the order of at least one subfield may be determined differently.

If a specific subfield value included in the UL NOMA feature field is set to 1 (or 0), this may indicate that a UL signal is to be transmitted in a manner corresponding to the specific subfield. As another example, if a specific subfield value included in the UL NOMA feature field is set to 0 (or 1), this may indicate that a UL signal is to be transmitted without utilizing the manner corresponding to the specific subfield. For example, if the full spreading subfield value is 1 (or 0), this may indicate that a UL signal is to be transmitted in a full spreading manner.

As another example, assume that at least one subfield included in the UL NOMA feature field is configured as in (a) of Fig. 11. When the UL NOMA feature field value is 100000, a trigger frame including the UL NOMA feature field may request that a UL TB PPDU with only sparse spreading applied be transmitted to the STA.

The UL NOMA feature field may be configured with less than 6 bits in terms of overhead reduction. For example, if simultaneous transmission based on multiple features is not supported, the UL NOMA feature field may be configured with 3 bits (i.e., 8 cases). For example, the UL NOMA feature field may be configured as shown in Table 1.

**[Table 1]**

| UL NOMA Feature Field Values | Features (or methods) applied to UL TB PPDU transmission |
|---|---|
| 0 | Sparse spreading |
| 1 | Full spreading |
| 2 | Bit-level interleave |
| 3 | Bit-level scrambling |
| 4 | Symbol-level interleave |
| 5 | Symbol-level scrambling |
| 6 | Reserved |
| 7 | Reserved |

However, this is only an embodiment, and the features applied to UL TB PPDU transmission corresponding to UL NOMA specific field values in Table 1 may be changed. The spreading factor field may indicate the number of radio resources on which repeated transmissions are to be performed when a UL NOMA trigger frame triggers a UL TB PPDU. For example, the spreading factor subfield may indicate the number of resources on which repeated transmissions can be performed on the same unit time **(e.g.,** symbol)/frequency basis.

The spreading factor field value may be set to various values. For example, the number of bits in the spreading factor subfield can be determined/defined as a value of 1 bit or more.

The spreading domain field may indicate the domain in which the repetitive transmission is performed. For example, the spreading domain subfield may indicate either the time domain or the frequency domain, and thus the repetitive transmission may be performed within the time domain or the frequency domain.

However, this is only one embodiment, and the spreading domain subfield may not be included in the common field of the UL NOMA trigger frame.

As an example of the present disclosure, a UL NOMA trigger frame may be configured as shown in (b) of FIG. 11. The common information field of the UL NOMA trigger frame may include at least one of a UHR variant common information field, a UL NOMA feature field, a spreading factor field, and a spreading domain field. That is, at least one of the UL NOMA feature field, the spreading factor field, and the spreading domain field may follow the UHR variant common information field.

For example, as illustrated in (c) of FIG. 11, at least one of the UL NOMA feature field, the spreading factor field, and the spreading domain field may be included in a trigger dependent common info field of the UL NOMA trigger frame. The trigger dependent common info field may follow the UHR variant common info field.

### Embodiment 1-2

The user field of the UL NOMA trigger frame may include a MA (multiple access) signature field consisting of N bits.

For example, assume a case where a 6-bit UL NOMA feature field is included in the common information field of a UL NOMA trigger frame. A value representing a user **(i.e.,** STA) signature corresponding to one or more UL NOMA features indicated/applied through the 6-bit UL NOMA feature field can be indicated by the N-bit MA signature field. That is, the N-bit MA signature field can indicate a (repeated) transmission pattern associated with one or more UL NOMA features indicated/applied through the UL NOMA feature field.

For example, assume a case where a sparse spreading feature is indicated through the UL NOMA feature field. In this case, the MA signature field may indicate a repetitive transmission pattern to which the sparse spreading feature is applied.

The N-bit value may be determined based on a specific feature having the largest number of candidate signatures **(i.e.,** transmission patterns) among each MA signature. If another feature having a smaller number of candidate signatures than the specific feature is indicated by the UL NOMA feature field, some bits of the N-bit MA signature may be reserved.

For example, when a 3-bit UL NOMA feature field is included on the common information field, at least one MA user signature value indicated by the UL NOMA feature field can be applied to an N-bit MA signature field.

As an example of the present disclosure, the user field of the UL NOMA trigger frame may be based on the UHR variant user information field. The N-bit MA signature field may follow the UHR variant user information field. As another example, the N-bit MA signature field may be included in the trigger dependent user field included in the user field of the UL NOMA trigger frame.

### Embodiment 2

Embodiment 2 relates to a case where a trigger frame for triggering a PPDU to which the UL NOMA method is applied **(e.g.,** UL NOMA UHR TB PPDU, etc.) is based on a basic trigger frame.

A (basic) trigger frame for triggering a PPDU to which the UL NOMA method is applied may include a common information field and a user information field.

The user information field may include a UL NOMA indication field indicating that the trigger frame is a trigger frame for triggering a PPDU to which the UL NOMA method is applied. Here, the UL NOMA indication field may consist of 1 bit and may be included in or follow the UHR variant common information field.

For example, if the UL NOMA indication field value is 1 (or 0), it may indicate that the corresponding trigger frame is a basic trigger frame for triggering a PPDU to which the UL NOMA method is applied. If the UL NOMA indication field value is 0 (or 1), this may indicate that the corresponding trigger frame is a basic trigger frame for triggering a general UHR TB PPDU.

If the UL NOMA indication field indicates that the trigger frame is a basic trigger frame for triggering a PPDU to which the UL NOMA method is applied, the basic trigger frame may include the common information field described in Embodiment 1-1 and the user information field described in Embodiment **1-2.**

That is, the configuration of the basic trigger frame may correspond to the configuration described in Embodiment **1,** Embodiment **1-1,** and Embodiment **1-2.**

For example, the common information field of the corresponding basic trigger frame may include at least one of a UL NOMA feature field, a spreading factor field, and a spreading domain field. And, the user information field of the corresponding basic trigger frame may include an N-bit MA signature field associated with the UL NOMA feature field.

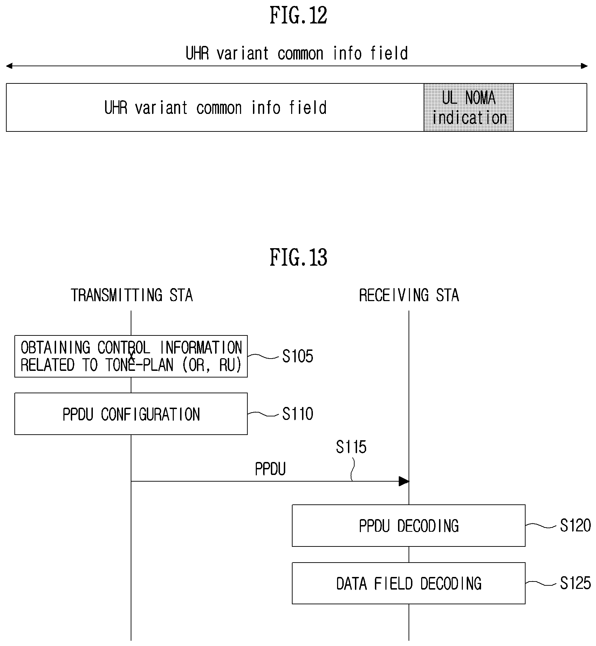

FIG. 13 is a diagram for explaining a PPDU transmission and reception procedure between a transmitting STA and a receiving STA according to one embodiment of the present disclosure. Some step(s) shown in FIG. 13 may be omitted depending on situations and/or configurations. The transmitting device and the receiving STA may be an AP and/or a non-AP STA.

The transmitting STA may obtain control information related to the tone plan (or RU) described above (S105). The control information related to the tone plan may include the size and location of the RU, control information related to the RU, information about the frequency band in which the RU is included, information about the STA receiving the RU, etc.

The transmitting STA may configure/generate a PPDU based on the acquired control information (S110). Configuring/generating a PPDU may mean configuring/generating each field of the PPDU. That is, the step of configuring/generating a PPDU may include a step of configuring an EHT-SIG-A/B/C field including control information regarding a tone-plan.

That is, the step of configuring/generating a PPDU may include a step of configuring a field including control information **(e.g.,** an N bitmap) indicating the size/position of the RU and/or a step of configuring a field including an identifier **(e.g.,** an AID) of an STA receiving the RU.

Additionally, the step of configuring/generating a PPDU may include a step of generating an STF/LTF sequence to be transmitted via a specific RU. The STF/LTF sequence may be generated based on a preset STF generation sequence/LTF generation sequence.

Additionally, the step of constructing/generating a PPDU may include a step of generating a data field (i.e., an MPDU) to be transmitted via a particular RU.

The transmitting STA may transmit the configured/generated PPDU to the receiving STA (S115).

Specifically, the transmitting STA may perform at least one of cyclic shift diversity (CSD), spatial mapping, inverse discrete Fourier transform (IDFT)/inverse fast Fourier transform (IFFT) operation, guard interval (GI) insert operation, etc.

The receiving STA may decode the PPDU and obtain control information related to the tone plan (or RU) (S120).

Specifically, the receiving STA may decode the L-SIG and EHT-SIG of the PPDU based on the L-STF/LTF, and obtain information included in the L-SIG and EHT SIG fields. Information about various tone-plans (i.e., RUs) of the present disclosure can be included in the EHT-SIG (e.g., EHT-SIG-A/B/C), and the receiving STA can obtain information about the tone-plan (i.e., RU) through the EHT-SIG.

The receiving STA may decode the remaining part of the PPDU based on the information about the acquired tone-plan (i.e., RU) (S125). For example, the receiving STA may decode the STF/LTF field of the PPDU based on the information about the tone-plan (i.e., RU). In addition, the receiving STA can decode the data field of the PPDU based on the information about the tone-plan **(i.e.,** RU) and obtain the MPDU included in the data field.

In addition, the receiving STA may perform a processing operation to transfer the decoded data to a higher layer **(e.g.,** a MAC layer). In addition, if the generation of a signal is instructed from the higher layer to the PHY layer in response to the data transferred to the higher layer, the receiving STA may perform a subsequent operation.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

### [Industrial Applicability]

A method proposed by the present disclosure is mainly described based on an example applied to an IEEE 802.11-based system, but may be applied to various WLAN or wireless communication systems other than the IEEE 802.11-based system.

## Claims

1. A method performed by a first station (STA) in a wireless LAN system, the method comprising:
receiving a trigger frame from a second STA; and
transmitting a trigger-based (TB) physical layer protocol data unit (PPDU) to the second STA based on the trigger frame,
wherein the trigger frames includes i) first information related to at least one uplink (UL) non-orthogonal multiple access (NOMA) transmission feature and ii) second information indicating at least one multiple access (MA) signature value based on the at least one UL NOMA transmission feature.

2. The method of claim 1, wherein:
the first information is indicated by a first field included in a common information field or a trigger dependent common information field of the trigger frame, and
the second information is indicated by a second field included in a user information field or a trigger dependent user information field of the trigger frame.

3. The method of claim 1, wherein:
the at least one UL NOMA transmission feature includes at least one of sparse spreading, full spreading, bit level interleave, bit level scramble, symbol level interleave, or symbol level scramble.

4. The method of claim 1, wherein:
a pattern associated with at least one UL NOMA transmission feature is indicated by at least one MA signature value.

5. The method of claim 1, wherein:
the common information field of the trigger frame includes a trigger type subfield, and
the trigger type subfield indicates that a type of the trigger frame is a trigger frame for triggering NOMA-based transmission.

6. The method of claim 5, wherein:
a value of the trigger type subfield is set to one of 9 to 15.

7. The method of claim 1, wherein:
the common information field of the trigger frame includes third information indicating whether transmission of the TB PPDU is performed as NOMA-based transmission.

8. The method of claim 2, wherein:
the first field is followed by a UHR (ultra-high reliability) variant common information field of the common information field.

9. The method of claim 2, wherein:
the common information field or trigger dependent common information field of the trigger frame includes at least one of a spreading factor subfield or a spreading domain subfield.

10. The method of claim 3, wherein:
the first field includes: six 1-bit indication subfields or a single 3-bit indication field indicating whether the sparse spreading, the full spreading, the bit-level interleaving, the bit-level scrambling, the symbol-level interleaving, and the symbol-level scrambling are applied, respectively.

11. A first station (STA) operating in a wireless LAN system, the first STA comprising:
at least one transceiver; and
at least one processor connected to the at least one transceiver,
wherein the at least one processor is configured to:
receive a trigger frame from a second STA through the at least one transceiver; and
transmit a trigger-based (TB) physical layer protocol data unit (PPDU) to the second STA based on the trigger frame through the at least one transceiver,
wherein the trigger frames includes i) first information related to at least one uplink (UL) non-orthogonal multiple access (NOMA) transmission feature and ii) second information indicating at least one multiple access (MA) signature value based on the at least one UL NOMA transmission feature.

12. A method performed by a second station (STA) in a wireless LAN system, the method comprising:
transmitting a trigger frame to a first STA; and
receiving a trigger-based (TB) physical layer protocol data unit (PPDU) from the first STA based on the trigger frame,
wherein the trigger frames includes i) first information related to at least one uplink (UL) non-orthogonal multiple access (NOMA) transmission feature and ii) second information indicating at least one multiple access (MA) signature value based on the at least one UL NOMA transmission feature.

13. A second station (STA) operating in a wireless LAN system, the first STA comprising:
at least one transceiver; and
at least one processor connected to the at least one transceiver,
wherein the at least one processor is configured to:
transmit a trigger frame to a first STA through the at least one transceiver; and
receive a trigger-based (TB) physical layer protocol data unit (PPDU) from the first STA based on the trigger frame through the at least one transceiver,
wherein the trigger frames includes i) first information related to at least one uplink (UL) non-orthogonal multiple access (NOMA) transmission feature and ii) second information indicating at least one multiple access (MA) signature value based on the at least one UL NOMA transmission feature.

14. A processing apparatus configured to control a first station (STA) in a wireless LAN system, the processing apparatus comprising:
at least one processor; and
at least one computer memory operably connected to the at least one processor and storing instructions that, based on being executed by the at least one processor, perform operations comprising:
receiving a trigger frame from a second STA; and
transmitting a trigger-based (TB) physical layer protocol data unit (PPDU) to the second STA based on the trigger frame,
wherein the trigger frames includes i) first information related to at least one uplink (UL) non-orthogonal multiple access (NOMA) transmission feature and ii) second information indicating at least one multiple access (MA) signature value based on the at least one UL NOMA transmission feature.

15. At least one non-transitory computer-readable medium storing at least one instruction,
wherein the at least one instruction executable by at least one processor controls a device in a wireless LAN system to:
receive a trigger frame from a second STA; and
transmit a trigger-based (TB) physical layer protocol data unit (PPDU) to the second STA based on the trigger frame,
wherein the trigger frames includes i) first information related to at least one uplink (UL) non-orthogonal multiple access (NOMA) transmission feature and ii) second information indicating at least one multiple access (MA) signature value based on the at least one UL NOMA transmission feature.
